# EUROPÄISCHE PATENTANMELDUNG

(11) **EP 2 990 994 A1**
(43) Veröffentlichungstag der Anmeldung: **02.03.2016**
(21) Anmeldenummer: 15181609.7
(22) Anmeldetag: 19.08.2015
(51) Int. Cl.: G06K 9/00

(54) **SYSTEM ZUR VISUALISIERUNG VON MIT DIGITALEN KAMERAS AUFGENOMMENEN PANORAMABILDERN AN CLIENT-GERÄTEN**

(30) Priorität: 25.08.2014 AT 501312014
(71) Anmelder: Mairinger, Klaus, 5302 Henndorf (AT)
(72) Erfinder: Mairinger, Klaus, 5302 Henndorf (AT)
(74) Vertreter: Schwarz & Partner

(57) **Zusammenfassung**

Das System (1) zur Visualisierung von mit digitalen Kameras (4, 5) aufgenommenen Panoramabildern (10) an Client-Geräten (8) umfasst einen Server-Rechner (2), der über ein Netzwerk (3) mit den Kameras verbindbar ist. Der Server-Rechner greift auf eine Landschaftspunkte-Datenbank (6) zu, die Informationen über von den Kameras erfassbare Landschaftspunkte enthält, z.B. ihre Koordinaten, ihre Namen, etc.. Der Server-Rechner besitzt eine Netzwerkschnittstelle (2a), z.B. einen Webserver, für den Zugriff von Client-Geräten auf die vom Server-Rechner visualisierten Panoramabilder. Das Visualisieren der Panoramabilder umfasst z.B. das Anzeigen von Informationen aus der Landschaftspunkte-Datenbank zu im Panoramabild sichtbaren Landschaftspunkten. Der Server-Rechner (2) greift auch auf eine Kameradatenbank (7) zu, in der kameraspezifische Daten, umfassend die von den Kameras erfassbaren Landschaftspunkte, etc. enthalten sind. Wenn in einem Panoramabild Landschaftspunkte von mehreren Kameras aus sichtbar sind, blendet der Server-Rechner (2) ein Multikameras-Symbol (11) ein.

## Beschreibung

Die Erfindung betrifft ein System zur Visualisierung von mit digitalen Kameras aufgenommenen Panoramabildern an Client-Geräten, wie Computer, Tablet-Computer, Smartphones, etc.. Das System umfasst zumindest einen Server-Rechner, der über ein Netzwerk, wie z.B. das Internet, mit den digitalen Kameras verbindbar ist, wobei der Server-Rechner Zugriff auf eine Landschaftspunkte-Datenbank hat, in der Informationen über von den Kameras erfassbare Landschaftspunkte enthalten sind, welche Informationen die Koordinaten der Landschaftspunkte, die Namen der Landschaftspunkte in zumindest einer Sprache, die Seehöhen der Landschaftspunkte und/oder Verlinkungen zu weiterführenden Internet-Seiten umfassen. Der Server-Rechner weist eine Netzwerkschnittstelle, wie z.B. einen Webserver, für den Zugriff von Client-Geräten auf die vom Server-Rechner visualisierten Panoramabilder auf. Die Visualisierung der Panoramabilder umfasst das Anzeigen von Informationen aus der Landschaftspunkte-Datenbank zu im Panoramabild sichtbaren Landschaftspunkten, das Zoomen der Panoramabilder und/oder das Neigen der Panoramabilder.

Es sind seit langer Zeit Panoramatafeln an touristisch interessanten Plätzen aufgestellt, die ein Panoramabild, das eine Rundum-Ansicht sein kann, mit Zusatzinformationen zu Landschaftspunkten darstellen, beispielsweise den Namen und Höhen von Berggipfeln. Es sind weiters Applikationen für Smartphones auf den Markt gekommen, bei denen der Standort des Smartphones, seine Richtung und Neigung zum Zeitpunkt der Aufnahme eines Landschaftsbildes sowie der Zoomfaktor der Kamera ermittelt werden, und aus dieser Information aus einer Datenbank die Namen und Seehöhen der im Bild zu sehenden Berggipfel geholt und angezeigt werden, siehe z.B. http://peakar.salzburrgresearch.at.

Der vorliegenden Erfindung liegt die Aufgabe zugrunde, das eingangs erwähnte System zur Visualisierung von Panoramabildern zu verbessern. Insbesondere sollen durch das erfindungsgemäße System umfassende Informationen übersichtlich dargestellt werden und Ansichten von Landschaftspunkten aus unterschiedlichen Perspektiven geboten werden.

Die Erfindung löst diese Aufgabe durch Bereitstellen eines Systems zur Visualisierung von mit digitalen Kameras aufgenommenen Panoramabildern an Client-Geräten mit den kennzeichnenden Merkmalen des Anspruchs 1. Weitere Vorteile werden durch die in den Unteransprüchen dargelegten Fortbildungen des Systems erzielt.

Gemäß der Erfindung ist das eingangs erläuterte Visualisierungssystem dahin gehend weiter entwickelt worden, dass der Server-Rechner Zugriff auf eine Kameradatenbank hat, in der kameraspezifische Daten, umfassend die von den Kameras erfassbaren Landschaftspunkte und optional Inhalte zu den von den Kameras aufgenommenen Panoramabildern, z.B. Hotspots, Logos, Tickertexte, enthalten sind, wobei der Server-Rechner bei der Visualisierung eines von einer Kamera aufgenommenen Panoramabildes zu im Panoramabild enthaltenen Landschaftspunkten, welche auch von anderen Kameras aus sichtbar sind, ein Multikameras-Symbol einblendet, das auf die Sichtbarkeit des Landschaftspunktes von den anderen Kameras aus hinweist.

Durch diese Maßnahme wird dem Benutzer eines Client-Geräts optisch signalisiert, dass er den für ihn interessanten Landschaftspunkt auch aus einer von einer anderen Kamera aufgenommenen Perspektive betrachten kann.

Wenn die Landschaftspunkte-Datenbank eine Zuordnung von Landschaftspunkten zu jenen Kameras enthält, in deren Blickfeldern sich der jeweilige Landschaftspunkt befindet, kann der Server-Rechner mit geringem Rechenaufwand ermitteln, dass für den Landschaftspunkt das Multikameras-Symbol einzublenden ist. Alternativ dazu muss der Server-Rechner aus der Kameradatenbank ermitteln, ob ein bestimmter Landschaftspunkt von mehreren Kameras einsehbar ist.

Um dem Benutzer eines Client-Geräts das Umschalten der Ansicht eines Landschaftspunktes zu einer anderen Perspektive möglichst einfach zu machen, sieht die Erfindung vor, dass bei Anwählen des einem Landschaftspunkt zugeordneten Multikameras-Symbols, z.B. mittels Anklicken mit einem Zeigegerät des Client-Geräts, der Server-Rechner dem Client-Gerät in das visualisierte Panoramabild eine Auswahlliste jener Kameras einblendet, in deren Blickfeld dieser Landschaftspunkt liegt, wobei der Server-Rechner dem Client-Gerät, wenn von diesem eine andere Kamera ausgewählt wird, das von der ausgewählten Kamera aufgenommene Panoramabild visualisiert.

Für eine hochwertige Visualisierung von Landschaftspunkten in verschiedenen Panoramabildern ist es vorteilhaft, wenn die Kameradatenbank die Blickrichtung der Kamera auf den jeweiligen Landschaftspunkt in Form einer Winkelangabe, die Entfernung der Kamera zum Landschaftspunkt und/oder eine Klassifizierung des Landschaftspunktes enthält. Die Klassifizierung kann unterschiedliche Relevanzstufen beinhalten.

Um dem Benutzer eines Client-Geräts übersichtlich visualisierte Panoramabilder zu bieten und um ihm zusätzlich die Möglichkeit zu geben, in die Panoramabilder eingeblendete Information nach seinen Vorlieben auszuwählen, ist in einer Fortbildung des erfindungsgemäßen Systems vorgesehen, dass der Server-Rechner bei der Visualisierung der Panoramabilder Informationen aus der Landschaftspunkte-Datenbank nur zu solchen Landschaftspunkten anzeigt, die einem mittels des Client-Gerät einstellbaren Filterkriterium, insbesondere der Entfernung des Landschaftspunktes zur Kamera, einer Eigenschaft des Landschaftspunktes, wie z.B. der Seehöhe, und/oder einer Klassifizierung entsprechen.

Damit sich ein Benutzer in den verschiedenen Ansichten eines Landschaftspunktes möglichst einfach zurecht findet, kann erfindungsgemäß bei Auswahl einer anderen Kamera der Server-Rechner den zugeordneten Landschaftspunkt im von der ausgewählten Kamera aufgenommenen Panoramabild mit einem Zoom-Faktor und/oder einer Neigung visualisieren, der/die dem Zoom-Faktor und/oder der Neigung des vorherigen Panoramabilds entspricht.

Die Erfindung wird nun unter Bezugnahme auf die Zeichnungen anhand eines nicht einschränkenden Ausführungsbeispiels näher erläutert. In den Zeichnungen zeigen:
- Fig. 1: ein schematisches Blockschaltbild des erfindungsgemäßen Systems;
- Fig. 2: ein von einer Kamera aufgenommenes Panoramabild mit Landschaftspunkten in Form von Berggipfeln;
- Fig. 3: einen Bildschirmausschnitt der Darstellung des Panoramabildes an einem Client-Gerät;
- Fig. 4: ein vom Server-Rechner erfindungsgemäß visualisiertes Panoramabild; und
- Fig. 5: einen Ausschnitt des visualisierten Panoramabildes von Fig. 4 mit einer dynamisch eingeblendeten Auswahlliste jener Kameras 4, 5, in deren Blickfeld ein ausgewählter Landschaftspunkt liegt.

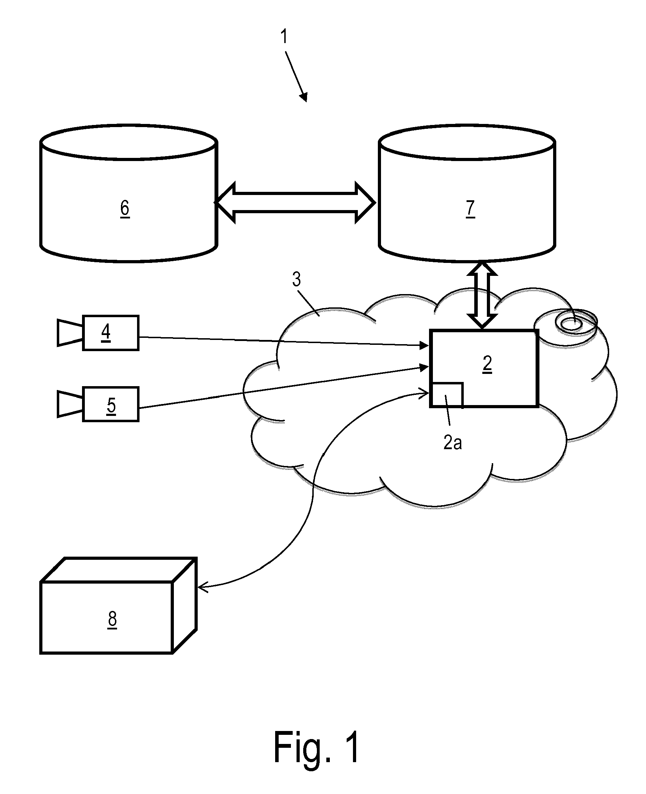

Wie in Fig. 1 schematisch dargestellt, umfasst das erfindungsgemäße System 1 zur Visualisierung von mit ortsfesten digitalen Kameras 4, 5 aufgenommenen Panoramabildern zumindest einen Server-Rechner 2, der über ein Netzwerk 3, wie z.B. das Internet, mit den digitalen Kameras 4, 5 verbindbar ist. Weiters weist das System 1 eine Landschaftspunkte-Datenbank 6 auf, auf die der Server-Rechner 2 Zugriff hat. In der Landschaftspunkte-Datenbank 6 sind Informationen über von den Kameras 4, 5 erfassbare Landschaftspunkte enthalten. Diese Informationen können die Koordinaten der Landschaftspunkte, die Namen der Landschaftspunkte in einer oder mehreren Sprachen, die Seehöhen der Landschaftspunkte, Verlinkungen zu weiterführenden Internet-Seiten und/oder Beschreibungen von weiteren Eigenschaften der Landschaftspunkte umfassen. Der Server-Rechner 2 bietet weiters eine Netzwerkschnittstelle 2a, wie z.B. einen Webserver, für den Zugriff von Client-Geräten 8 auf die vom Server-Rechner 2 visualisierten Panoramabilder. Das Visualisieren der Panoramabilder durch den Server-Rechner 2 umfasst das Anzeigen von Informationen aus der Landschaftspunkte-Datenbank zu im Panoramabild sichtbaren Landschaftspunkten, weiters das Zoomen der Panoramabilder und/oder das Neigen der Panoramabilder.

Das System 1 weist auch eine Kameradatenbank 7 auf, auf die der Server-Rechner 2 Zugriff hat. In der Kameradatenbank 7 sind kameraspezifische Daten enthalten, die von den Kameras erfassbare Landschaftspunkte und optional Inhalte zu den von den Kameras aufgenommenen Panoramabildern enthalten, z.B. Hotspots, Logos, Tickertexte. Diese Informationen werden einmalig pro Kamera erfasst und mit einem Administrationstool in die Kameradatenbank 7 eingespielt.

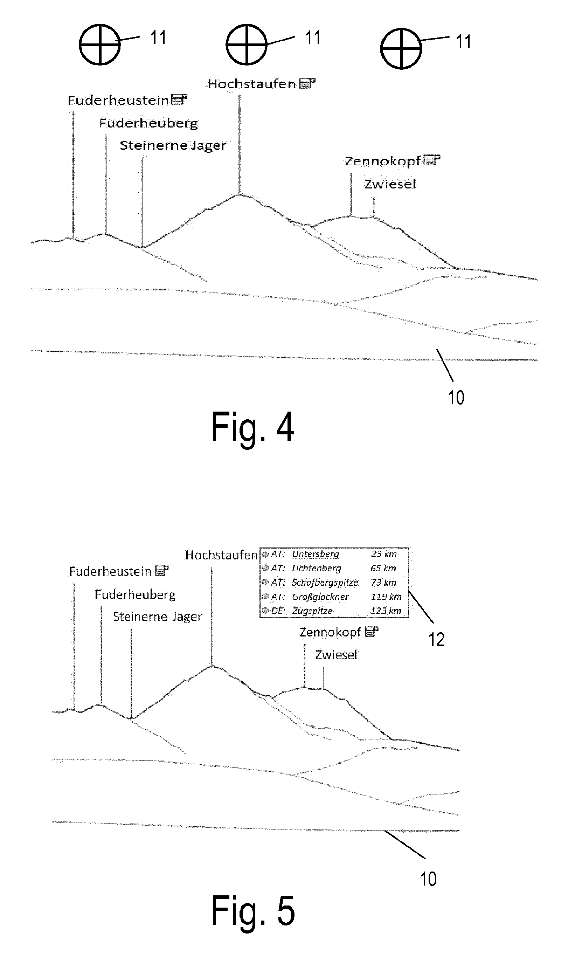

Im Zuge der Visualisierung von Panoramabildern durch den Server-Rechner 2 gemäß der Erfindung ermittelt der Server-Rechner 2 aus der Kameradatenbank 7, welche der im Panoramabild enthaltenen Landschaftspunkte von anderen Kameras 4, 5 gesehen werden können. Alternativ dazu kann in der Landschaftspunkte-Datenbank 6 eine Zuordnung von Landschaftspunkten zu jenen Kameras, in deren Blickfeldern sich der jeweilige Landschaftspunkt befindet, hinterlegt sein. In diesem Fall kann der Server-Rechner 2 aus der Landschaftspunkte-Datenbank 6 ermitteln, ob im Panoramabild enthaltene Landschaftspunkte von mehreren Kameras 4, 5 gesehen werden. Für jene Landschaftspunkte, die von mehreren Kameras gesehen werden, blendet der Server-Rechner 2 ein Multikameras-Symbol 11 ein (siehe Fig. 4), das auf die Sichtbarkeit des Landschaftspunktes von den anderen Kameras aus hinweist.

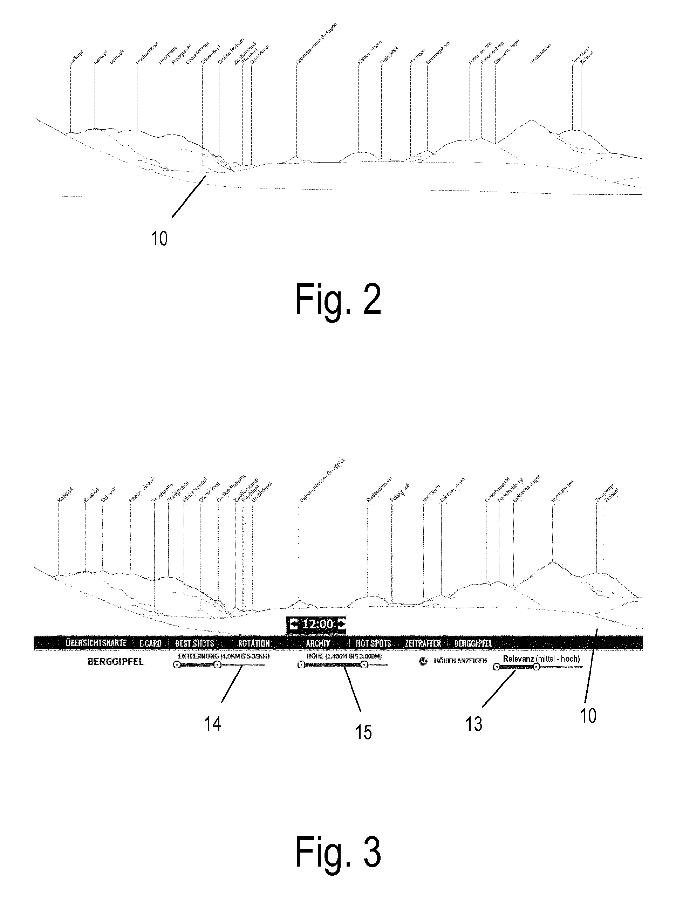

Anhand der Figuren 2 bis 5 wird nun der Vorgang des Visualisierens von Panoramabildern durch den Server-Rechner 2 näher erläutert. Fig. 2 zeigt ein beispielsweise von der Kamera 4 aufgenommenes Panoramabild 10. Dieses Panoramabild 10 enthält eine Vielzahl von Landschaftspunkten in Form von Berggipfeln. Bei der Visualisierung blendet der Server-Rechner die in der Landschaftspunkte-Datenbank 6 hinterlegten Namen der Berggipfel in einer auswählbaren Sprache ein. Wie in Fig. 2 zu sehen, enthält das Panoramabild 10 eine Vielzahl von Berggipfeln und ihre Namen. Um die Übersichtlichkeit zu steigern, ist es einem Betrachter mittels seines Client-Geräts 8 möglich, die Darstellung von Informationen anhand von Filterkriterien einzuschränken, wobei die Filterkriterien auf Informationen beruhen, die zu den Landschaftspunkten in der Landschaftspunkte-Datenbank 6 oder in der Kameradatenbank 7 hinterlegt sind. Fig. 3 zeigt einen Bildschirmausschnitt der Darstellung des Panoramabildes 10 mit an einem Clientgerät 8. Am unteren Rand des Panoramabildes 10 ist eine Leiste mit virtuellen Schiebereglern eingeblendet. Durch Verschieben eines jeweiligen Schiebereglers kann ein Filterkriterium beeinflusst werden, das einer Information über den Landschaftspunkt zugeordnet ist. Beispielsweise ist der Schieberegler 13 einer Relevanz-Klassifikation der Landschaftspunkte zugeordnet, die angibt, dass die Beschriftungen wichtiger Landschaftspunkte die Beschriftungen von weniger wichtigen Landschaftspunkten überdecken können. Mit dem Schieberegler 14 lässt sich einstellen, dass nur jene Landschaftspunkte beschriftet werden, die in einem bestimmten Entfernungsbereich von der Kamera liegen. Mit dem Schieberegler 15 lassen sich jene Berggipfel beschriften, deren Höhe in einem gewünschten Seehöhenbereich liegen.

Wie oben erwähnt und in Fig. 4 dargestellt, blendet der Server-Rechner ein Multikameras-Symbol 11 zu jenen Landschaftspunkten ein, die von mehreren Kameras 4, 5 zu sehen sind. Im Ausschnitt des Panoramabildes 10 von Fig. 4 sind drei Berggipfel mit dem Multikameras-Symbol gekennzeichnet. Wird nun dieses Symbol vom Benutzer des Client-Geräts 8 angeklickt, so blendet der Server-Rechner 2 dynamisch in das visualisierte Panoramabild 10 eine Auswahlliste 12 jener Kameras 4, 5 ein (siehe Fig. 5), in deren Blickfeld dieser Landschaftspunkt liegt. Klickt der Benutzer an seinem Client-Gerät auf ein Element dieser Auswahlliste 12, so schaltet der Server-Rechner 2 auf ein Panoramabild um, das von jener Kamera aufgenommen wurde, die dem ausgewählten Element in der Auswahlliste entspricht. Dabei visualisiert der Server-Rechner das neue Panoramabild so, dass es bezüglich seines Zoom-Faktors und/oder seiner Neigung dem Zoom-Faktor und/oder der Neigung des vorherigen Panoramabild entspricht. Derselbe Berggipfel ist dadurch in gleicher Weise, allerdings von einem anderen Standort aus zu sehen.

## Patentansprüche

1. System (1) zur Visualisierung von mit digitalen Kameras (4, 5) aufgenommenen Panoramabildern (10) an Client-Geräten (8), wie Computer, Tablet-Computer, Smartphones, etc., wobei das System zumindest einen Server-Rechner (2) umfasst, der über ein Netzwerk (3), wie z.B. das Internet, mit den digitalen Kameras verbindbar ist, wobei der Server-Rechner Zugriff auf eine Landschaftspunkte-Datenbank (6) hat, in der Informationen über von den Kameras erfassbare Landschaftspunkte enthalten sind, welche Informationen die Koordinaten der Landschaftspunkte, die Namen der Landschaftspunkte in zumindest einer Sprache, die Seehöhen der Landschaftspunkte und/oder Verlinkungen zu weiterführenden Internet-Seiten umfassen, wobei der Server-Rechner eine Netzwerkschnittstelle (2a), wie z.B. einen Webserver, für den Zugriff von Client-Geräten auf die vom Server-Rechner visualisierten Panoramabilder aufweist, wobei die Visualisierung der Panoramabilder das Anzeigen von Informationen aus der Landschaftspunkte-Datenbank zu im Panoramabild sichtbaren Landschaftspunkten, das Zoomen der Panoramabilder und/oder das Neigen der Panoramabilder umfasst,
**dadurch gekennzeichnet, dass**
der Server-Rechner (2) Zugriff auf eine Kameradatenbank (7) hat, in der kameraspezifische Daten, umfassend die von den Kameras erfassbaren Landschaftspunkte und optional Inhalte zu den von den Kameras aufgenommenen Panoramabildern (10), z.B. Hotspots, Logos, Tickertexte, enthalten sind, wobei der Server-Rechner bei der Visualisierung eines von einer Kamera aufgenommenen Panoramabildes zu im Panoramabild enthaltenen Landschaftspunkten, welche auch von anderen Kameras aus sichtbar sind, ein Multikameras-Symbol (11) einblendet, das auf die Sichtbarkeit des Landschaftspunktes von den anderen Kameras aus hinweist.

2. System nach Anspruch 1, **dadurch gekennzeichnet, dass** die Landschaftspunkte-Datenbank (6) eine Zuordnung von Landschaftspunkten zu jenen Kameras (4, 5) enthält, in deren Blickfeldern sich der jeweilige Landschaftspunkt befindet.

3. System nach Anspruch 1 oder 2, **dadurch gekennzeichnet, dass** bei Anwählen des einem Landschaftspunkt zugeordneten Multikameras-Symbols (11), z.B. mittels Anklicken mit einem Zeigegerät des Client-Geräts (8), der Server-Rechner (2) in das visualisierte Panoramabild eine Auswahlliste (12) jener Kameras einblendet, in deren Blickfelder dieser Landschaftspunkt liegt, wobei der Server-Rechner dem Client-Gerät, wenn von diesem aus der Auswahlliste eine andere Kamera ausgewählt wird, das von der ausgewählten Kamera aufgenommene Panoramabild visualisiert.

4. System nach einem der vorhergehenden Ansprüche, **dadurch gekennzeichnet, dass** die Kameradatenbank (7) die Blickrichtung der Kamera (4, 5) auf den jeweiligen Landschaftspunkt in Form einer Winkelangabe, die Entfernung der Kamera zum Landschaftspunkt und/oder eine Klassifizierung des Landschaftspunktes enthält.

5. System nach einem der vorhergehenden Ansprüche, **dadurch gekennzeichnet, dass** der Server-Rechner (2) bei der Visualisierung der Panoramabilder (10) Informationen aus der Landschaftspunkte-Datenbank (6) nur zu solchen Landschaftspunkten anzeigt, die einem mittels des Client-Gerät einstellbaren Filterkriterium, insbesondere der Entfernung des Landschaftspunktes zur Kamera, einer Eigenschaft des Landschaftspunktes, wie z.B. der Seehöhe, und/oder einer Klassifizierung entsprechen.

6. System nach einem der Ansprüche 3 bis 5, **dadurch gekennzeichnet, dass** bei Auswahl einer anderen Kamera der Server-Rechner den zugeordneten Landschaftspunkt im von der ausgewählten Kamera aufgenommenen Panoramabild mit einem Zoom-Faktor und/oder einer Neigung visualisiert, der/die dem Zoom-Faktor und/oder der Neigung des vorherigen Panoramabild entspricht.
